# EUROPEAN PATENT APPLICATION

(11) **EP 4 796 717 A1**
(43) Date of publication of application: **26.08.2026**
(21) Application number: 26157172.3
(22) Date of filing: 09.02.2026
(51) Int. Cl.: E02F 9/20, E02F 9/02, E02F 3/32, B60K 17/04

(54) **WORKING MACHINE**

(30) Priority: 25.02.2025 JP 2025028338
(71) Applicant: Yanmar Holdings Co., Ltd., Osaka (JP)
(72) Inventor: TERASHIMA, Jun, Fukuoka (JP); WAKUTA, Kensaku, Fukuoka (JP)
(74) Representative: Isarpatent

(57) **Abstract**

[Problem] To provide a working machine in which an output section including an electric motor is disposed at a position farther away from a road surface.

[Solution] A working machine 100 includes a traveling body 200 that can travel by a drive wheel 203. The drive wheel 203 is mounted on a side frame 2012. The side frame 2012 is connected to a lower side of a side portion of a center frame 2011. The working machine 100 includes an output section 1 and a transmission mechanism 3. The output section 1 is supported by the center frame 2011 and outputs a driving force of an electric motor 11. The transmission mechanism 3 transmits the driving force from the output section 1 to the drive wheel 203 side. The transmission mechanism 3 includes a transmission shaft portion 33. The transmission shaft portion 33 extends downward from the output section 1 side toward the drive wheel 203 side.

## Description

### TECHNICAL FIELD

The present invention relates to a working machine.

### BACKGROUND ART

Conventionally, as in Patent Document 1, there is known a turning-type construction machine including a lower traveling body in which a traveling electric motor that rotationally drives a drive wheel is mounted coaxially with the drive wheel.

### PRIOR ART DOCUMENT

### PATENT DOCUMENT

Patent Document 1: JP-A-2014-163190

### SUMMARY OF INVENTION

### TECHNICAL PROBLEM

However, when the drive wheel is rotated by the electric motor, it is necessary to use, in combination, a speed reducer that increases a driving force (rotational force) of the electric motor. Therefore, the drive system using the electric motor becomes larger than that of a hydraulic traveling motor used conventionally, and has high possibility of damage due to earth and sand, stones, rocks, and the like, and the electric motor becomes close to the position of a road surface, so that the possibility of damage to the electric motor becomes high.

In view of the above situation, an object of the present invention is to provide a working machine in which an output section including an electric motor is disposed at a position farther away from a road surface.

### SOLUTION TO PROBLEM

In order to achieve the above object, a working machine according to one aspect of the present invention includes a traveling body that can travel by a drive wheel. The drive wheel is mounted on a side frame. The side frame is connected to a lower side of a side portion of the center frame. The working machine includes an output section and a transmission mechanism. The output section is supported by the center frame and outputs a driving force of an electric motor. The transmission mechanism transmits the driving force from the output section to the drive wheel side. The transmission mechanism includes a transmission shaft portion. The transmission shaft portion extends downward from the output section side toward the drive wheel side.

Further features and advantages of the present invention will become more apparent from the following embodiments.

### ADVANTAGEOUS EFFECTS OF INVENTION

The present invention can provide a working machine in which an output section including an electric motor is disposed at a position farther away from a road surface.

### BRIEF DESCRIPTION OF DRAWINGS

Fig. 1 is a schematic side view illustrating a configuration example of a hydraulic excavator according to an embodiment;
Fig. 2 is a block diagram schematically illustrating configurations of a hydraulic system and the like of the hydraulic excavator;
Fig. 3 is a top view illustrating a schematic configuration example of a lower traveling body;
Fig. 4 is a rear view illustrating a configuration example of a drive unit in a first embodiment;
Fig. 5 is a rear view illustrating another configuration example of the drive unit in the first embodiment;
Fig. 6A is a schematic diagram illustrating a first configuration example of an output section in the first embodiment;
Fig. 6B is a schematic diagram illustrating a second configuration example of the output section in the first embodiment;
Fig. 6C is a schematic diagram illustrating a third configuration example of the output section in the first embodiment;
Fig. 6D is a schematic diagram illustrating a fourth configuration example of the output section in the first embodiment;
Fig. 6E is a schematic diagram illustrating a fifth configuration example of the output section in the first embodiment;
Fig. 7A is a schematic diagram illustrating a first configuration example of a drive section;
Fig. 7B is a schematic diagram illustrating a second configuration example of the drive section;
Fig. 7C is a schematic diagram illustrating a third configuration example of the drive section;
Fig. 7D is a schematic diagram illustrating a fourth configuration example of the drive section;
Fig. 7E is a schematic diagram illustrating a fifth configuration example of the drive section;
Fig. 8 is a rear view illustrating a configuration example of a drive unit in a second embodiment;
Fig. 9 is a rear view illustrating another configuration example of the drive unit in the second embodiment;
Fig. 10A is a schematic diagram illustrating a first configuration example of an output section in a second embodiment;
Fig. 10B is a schematic diagram illustrating a second configuration example of the output section in the second embodiment;
Fig. 10C is a schematic diagram illustrating a third configuration example of the output section in the second embodiment;
Fig. 10D is a schematic diagram illustrating a fourth configuration example of the output section in the second embodiment;
Fig. 10E is a schematic diagram illustrating a fifth configuration example of the output section in the second embodiment;
Fig. 11 is a rear view illustrating a configuration example of a drive unit in a third embodiment; and
Fig. 12 is a schematic diagram illustrating a configuration example of a drive unit in a fourth embodiment.

### DESCRIPTION OF EMBODIMENTS

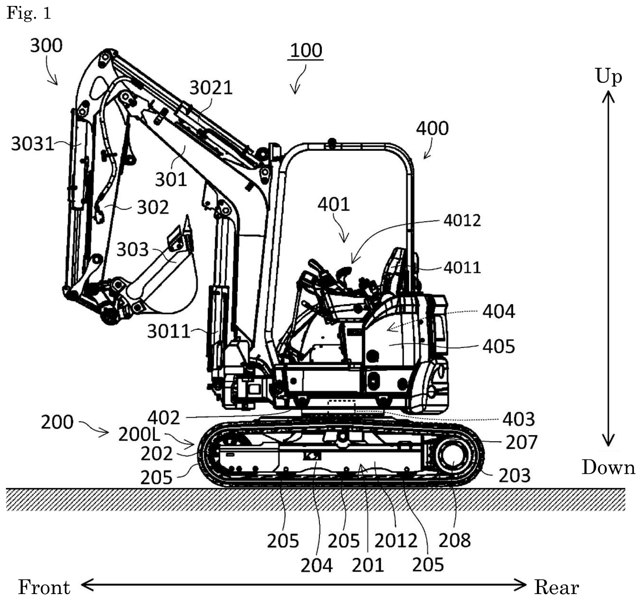

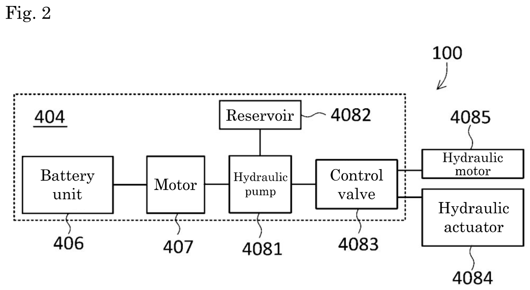

Hereinafter, embodiments of the present invention will be described with reference to the drawings. Fig. 1 is a schematic side view illustrating a configuration example of a hydraulic excavator 100 according to an embodiment. Fig. 2 is a block diagram schematically illustrating configurations of a hydraulic system and the like of the hydraulic excavator 100. The hydraulic excavator 100 is an example of a "working machine" of the present invention.

### < 1. Hydraulic Excavator 100>

The hydraulic excavator 100 includes a lower traveling body 200, an implement 300, and an upper turning body 400. Note that in the present embodiment, the upper turning body 400 (particularly, a portion including an engine room 404 to be described later) may be collectively referred to as a "machine body".

Note that directions in the present disclosure are defined as follows. First, a direction in which the lower traveling body 200 moves forward and backward is a "front-rear direction". In the "front-rear direction", a direction in which the lower traveling body 200 moves forward is "forward", and a direction in which the lower traveling body 200 moves backward is "rearward". Therefore, in a state where the upper turning body 400 does not turn with respect to the lower traveling body 200 (turning angle: 0°), the front-rear direction of the lower traveling body 200 coincides with a direction from one of the front side and the back side of a driver's seat 4011 to be described later on which an operator (driver) sits in the upper turning body 400 toward the other side.

In addition, in a state where the front is viewed from the rearward side, a direction from one of the left side and the right side of the lower traveling body 200 toward the other is a "left-right direction". In the "left-right direction", a direction toward the left side of the lower traveling body 200 is "leftward", and a direction toward the right side of the lower traveling body 200 is "rightward".

In addition, a direction from one of the lower traveling body 200 and the upper turning body 400 toward the other is an "up-down direction". In the up-down direction, a direction from the lower traveling body 200 to the upper turning body 400 is "upward", and a direction from the upper turning body 400 to the lower traveling body 200 is "downward". Therefore, when the hydraulic excavator 100 is disposed on a horizontal plane whose normal direction is the vertical direction, the up-down direction of the hydraulic excavator 100 coincides with the vertical direction. Furthermore, the upper side coincides with the vertically upper side, and the lower side coincides with the vertically lower side.

The front-rear direction, the left-right direction, and the up-down direction are perpendicular to each other.

However, the above definitions of directions are merely used for description, and are not intended to limit the actual positional relationships and directions.

### <1-1. Lower Traveling Body 200>

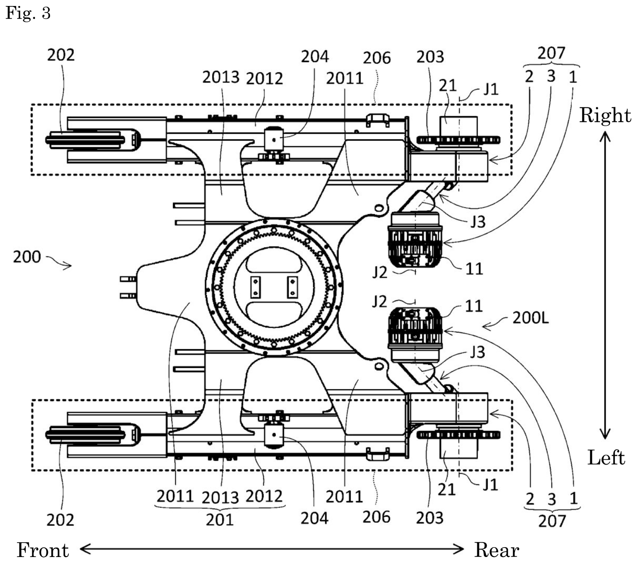

Fig. 3 is a top view illustrating a schematic configuration example of the lower traveling body 200. As illustrated in Figs. 1 and 3, the lower traveling body 200 includes a truck frame 201, an idler 202, a sprocket 203, an upper roller 204, a lower roller 205, a crawler 206, a holding member 207, and a drive unit 208.

The truck frame 201 is a member serving as a framework of the lower traveling body 200. The truck frame 201 includes a center frame 2011, a pair of left and right side frames 2012, and a pair of left and right link frames 2013.

The center frame 2011 is a box that turnably supports the upper turning body 400. An opening 2014 is formed in a central portion of a top plate of the center frame 2011. At an edge along an outer edge of the opening 2014 of the top plate, a turning bearing for turnably connecting the upper turning body 400 is disposed.

The pair of left and right side frames 2012 are connected to lower sides of side portions of the center frame 2011 in the left-right direction via the link frame 2013. For example, the left side frame 2012 is disposed obliquely downward to the left (that is, leftward and downward) from a left end portion of the center frame 2011 via the left link frame 2013. The right side frame 2012 is disposed obliquely downward to the left (that is, leftward and downward) from a right end portion of the center frame 2011 via the right link frame 2013.

Each of the side frames 2012 extends in the front-rear direction. In addition, as illustrated in Figs. 1 and 3, the idler 202, the sprocket 203, the upper roller 204, the lower roller 205, the crawler 206, the holding member 207, and the drive unit 208 are mounted on each of the side frames 2012.

The link frame 2013 connects the center frame 2011 and each of the side frames 2012. A right end of the left link frame 2013 is connected to the left end portion of the center frame 2011. A left end of the left link frame 2013 is located below the right end and is connected to the left side frame 2012. A left end of the right link frame 2013 is connected to the right end portion of the center frame 2011. A right end of the right link frame 2013 is located below the left end and is connected to the right side frame 2012.

The sprocket 203 is a gear-shaped drive wheel mounted on the side frame 2012. In the present embodiment, the sprocket 203 is disposed at a rear end portion of the side frame 2012, and seamlessly rotationally moves the crawler 206. The lower traveling body 200 can travel by the sprockets 203 mounted on the respective side frames 2012.

The idler 202 is an idler wheel mounted on the side frame 2012 on the side opposite to the sprocket 203 in the front-rear direction. In the present embodiment, the idler 202 is rotatably connected to a front end portion of the side frame 2012. The upper roller 204 is rotatably disposed above the side frame 2012. The lower roller 205 is rotatably disposed below the side frame 2012. The idler 202, the upper roller 204, and the lower roller 205 guide the rotational movement of the crawler 206.

The crawler 206 is an annular crawler belt stretched across the idler 202, the sprocket 203, the upper roller 204, and the lower roller 205. On an inner surface of the crawler 206, a plurality of protrusions arranged in the rotation direction are disposed. The protrusions mesh with teeth of the sprocket 203. Thus, the crawler 206 rotationally moves in accordance with the rotation of the sprocket 203.

The drive unit 208 outputs a driving force to the sprocket 203 to rotate the sprocket 203. A power source (for example, an electric motor 11 to be described later) of the drive unit 208 is supported by a rear end portion of the center frame 2011. In addition, an output end of the drive unit 208 is connected to the sprocket 203 side. The detailed configuration of the drive unit 208 will be described later.

The holding member 207 holds the output end of the drive unit 208 with respect to the side frame 2012. In the present embodiment, the holding member 207 is disposed at the rear end portion of the side frame 2012.

### <1-2. Implement 300>

The implement 300 includes a boom 301, a boom cylinder 3011, an arm 302, an arm cylinder 3021, a bucket 303, and a bucket cylinder 3031. The hydraulic excavator 100 can perform excavation work for earth and sand, or the like by independently driving the boom 301, the arm 302, and the bucket 303. A proximal end portion of the boom 301 is supported by a right front portion of the upper turning body 400. The boom 301 is rotatable in the up-down direction with respect to the upper turning body 400 by the boom cylinder 3011 that is movable in a telescopic manner. A proximal end portion of the arm 302 is connected to a distal end portion of the boom 301. The arm 302 is rotatable in the up-down direction with respect to the boom 301 by the arm cylinder 3021 that is movable in a telescopic manner. The bucket 303 is supported by a distal end portion of the arm 302. The bucket 303 is rotatable with respect to the arm 302 by the bucket cylinder 3031 that is movable in a telescopic manner.

### < 1-3. Upper Turning Body 400>

The upper turning body 400 is disposed above the lower traveling body 200 and is turnable with respect to the lower traveling body 200. The upper turning body 400 includes an operation section 401, a machine body frame 402, a turning motor 403, the engine room 404, and a hood 405.

The driver's seat 4011 is disposed in the operation section 401. An operator sits on the driver's seat 4011. Various devices (manipulation lever, monitor, and the like) are disposed around the driver's seat 4011. When the operator sits on the driver's seat 4011 and manipulates the manipulation lever or the like, a hydraulic actuator 4084, a hydraulic motor 4085, and the like, which will be described later, are driven. Thus, the hydraulic excavator 100 can perform traveling of the lower traveling body 200, excavation work by the implement 300, turning of the upper turning body 400, and the like.

The machine body frame 402 is a base of the machine body and has a plate shape extending perpendicularly to the up-down direction. Various devices and the like mounted on the operation section 401, the turning motor 403, and the engine room 404 are mounted on the machine body frame 402.

The turning motor 403 turns the upper turning body 400 via the turning bearing. Note that the turning motor 403 is a hydraulic motor in the present embodiment, but is not limited to this example, and may be an electric motor. The engine room 404 is an internal space of the machine body surrounded by the machine body frame 402 and the hood 405, and is disposed below the operation section 401.

The upper turning body 400 further includes a battery unit 406, a motor 407, a hydraulic pump 4081, a reservoir 4082, a control valve 4083, the hydraulic actuator 4084, and the hydraulic motor 4085 (see Fig. 2). The battery unit 406, the motor 407, the hydraulic pump 4081, the reservoir 4082, and the control valve 4083 are housed in the engine room 404.

The battery unit 406 includes, for example, a chargeable/dischargeable secondary battery such as a lithium ion battery, and supplies power to a component (for example, the motor 407) of the hydraulic excavator 100 requiring power. The motor 407 drives the hydraulic pump 4081.

The hydraulic pump 4081 supplies hydraulic oil supplied from the reservoir 4082 to the control valve 4083. The reservoir 4082 is a work oil tank that stores the hydraulic oil. The control valve 4083 includes a plurality of direction switching valves, and controls the flow (flow direction, flow rate, and the like) of the work oil pressure-fed from the hydraulic pump 4081. For example, the control valve 4083 supplies the work oil to the hydraulic actuator 4084, the hydraulic motor 4085, and the like. The hydraulic actuator 4084 includes, for example, the boom cylinder 3011, the arm cylinder 3021, the bucket cylinder 3031, and the like. The hydraulic motor 4085 includes the turning motor 403 and the like.

Note that the hydraulic excavator 100 is not limited to the above example and may have a configuration in which hydraulic equipment such as the hydraulic actuator 4084 and the hydraulic motor 4085 and an actuator driven by electric power are used in combination. Examples of the actuator driven by electric power include an electric traveling motor, an electric cylinder, and an electric turning motor.

### <1-4. Drive Unit 208>

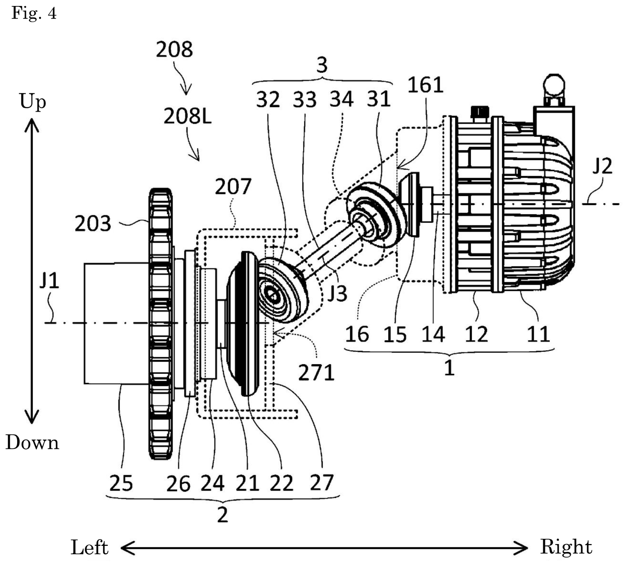

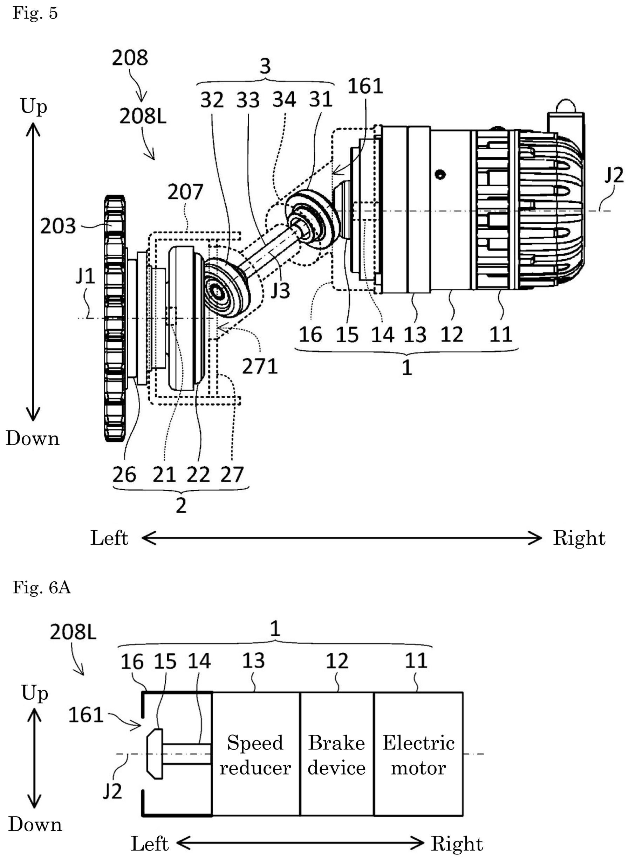

Next, configuration examples of a drive unit 208 in a first embodiment will be described with reference to Figs. 3 to 5. Fig. 4 is a rear view illustrating a configuration example of the drive unit 208 in the first embodiment. Fig. 5 is a rear view illustrating another configuration example of the drive unit 208 in the first embodiment. Note that the structures of the drive units 208 on the left and right sides are bilaterally symmetrical, and are otherwise the same. Therefore, in the description of the configuration of the drive unit 208, a configuration example of a drive unit 208L on the left side will be described, and the description of the configuration of the drive unit 208 on the right side will be omitted. In addition, Figs. 4 and 5 are diagrams of the drive unit 208L on the left side as viewed from the rear side to the front. In Figs. 4 and 5, the left side corresponds to the outside in the left-right direction, and the right side corresponds to the inside in the left-right direction.

As illustrated in Figs. 3 to 5, the drive unit 208 includes an output section 1, a drive section 2, and a transmission mechanism 3. The output section 1 generates a driving force (rotational force) for rotating the sprocket 203, and outputs the driving force to the sprocket 203 via the transmission mechanism 3 and the drive section 2. The output section 1 is supported by the center frame 2011. The output section 1 is horizontally disposed at the rear end portion of the center frame 2011 such that an output shaft portion 14 that outputs the driving force faces outward in the left-right direction (that is, leftward). The drive section 2 is disposed obliquely below and obliquely behind the output section 1 outward in the left-right direction, and drives the sprocket 203. The transmission mechanism 3 transmits the driving force from the output section 1 to the sprocket 203 side. For example, the transmission mechanism 3 connects the output section 1 and the drive section 2, and transmits the driving force (rotational force) transmitted from the output section 1 to the drive section 2. The drive section 2 rotates the sprocket 203 by the driving force (rotational force) of the output section 1 transmitted via the transmission mechanism 3.

In Figs. 3 to 5, the output section 1 is disposed away from the drive section 2 in the left-right direction. However, the examples of Figs. 3 to 5 do not exclude a configuration in which the left-right-direction position of a part of the output section 1 is the same as the left-right-direction position of a part of the drive section 2.

In addition, the output section 1 is disposed to be separated inward (forward) in the front-rear direction from a rotation axis J1 of the sprocket 203 as viewed in the up-down direction (see Fig. 3). The rotation axis J1 extends in the left-right direction through the rotation center of the sprocket 203. However, this example does not exclude a configuration in which a part of the output section 1 overlaps the rotation axis J1 as viewed in the up-down direction.

### <1-4-1. Output Section 1>

For example in Fig. 4, the output section 1 includes the electric motor 11, a brake device 12, the output shaft portion 14, an output gear 15, and an output cover 16. The electric motor 11, the brake device 12, the output shaft portion 14, and the output gear 15 are disposed in the above-described order from the inner side to the outer side in the left-right direction. The output section 1 outputs the driving force of the electric motor 11.

The electric motor 11 is supported by the center frame 2011 and is horizontally disposed such that an output shaft (not illustrated) faces outward in the left-right direction (that is, leftward). Note that the output shaft of the electric motor 11 extends along a motor rotation axis J2 and is rotatable about the motor rotation axis J2. As illustrated in Figs. 3 and 4, the motor rotation axis J2 is parallel to the left-right direction.

The brake device 12 is, for example, a parking brake, and is disposed on the outer side of the electric motor 11 in the left-right direction. The brake device 12 suppresses or prevents the transmission of the driving force from the electric motor 11 to the output shaft portion 14 according to the operator's operation or the like in the operation section 401. That is, when the brake device 12 is activated, the transmission of the driving force is suppressed or prevented. On the other hand, when the activation of the brake device 12 is canceled, the transmission of the driving force is not suppressed or prevented. Alternatively, the brake device 12 suppresses or prevents driving (rotation) of the output shaft of the electric motor 11, the output shaft portion 14, and the like according to the operator's operation or the like in the operation section 401. Note that the configuration of the brake device 12 is not particularly limited. For example, the brake device 12 may be an electromagnetic clutch type, a mechanical type, or a hydraulic type.

The output shaft portion 14 is connected to the output shaft of the electric motor 11 and extends along the motor rotation axis J2. At least a part of the output shaft portion 14 protrudes outward in the left-right direction from an end of the brake device 12 on the outer side in the left-right direction.

The output gear 15 is mounted on the output shaft portion 14. Specifically, the output gear 15 is disposed on the outer side of the output shaft portion 14 in the left-right direction and extends in a radial direction with respect to the motor rotation axis J2. The output gear 15 is a bevel gear in Fig. 4, and is disposed at an end of the output shaft portion 14 on the outer side in the left-right direction. The output gear 15 is engaged with an end of the transmission mechanism 3 on the output section 1 side.

In the present embodiment, the output shaft portion 14 extends in a direction parallel to the rotation axis J1 of the sprocket 203. That is, the motor rotation axis J2 is parallel to the rotation axis J1 of the sprocket 203. Thus, the output section 1 can output the driving force outward in the left-right direction (that is, toward the sprocket 203 side in the left-right direction). Thus, an interval between an output end of the output shaft portion 14 and the sprocket 203 side in the left-right direction can be further shortened. Therefore, it is possible to separate the output section 1 from a road surface while suppressing an increase in the length of a transmission path (for example, a transmission shaft portion 33) of the driving force from the output section 1 side toward the sprocket 203 side.

The output shaft portion 14 and the output gear 15 are rotatable about the motor rotation axis J2 together with the output shaft of the electric motor 11. The output shaft portion 14 outputs the driving force of the electric motor 11 to the transmission mechanism 3 via the output gear 15.

The output cover 16 is disposed at the end of the brake device 12 on the outer side in the left-right direction, and covers the output shaft portion 14, the output gear 15, and the like. An opening 161 is formed at a central portion of an end of the output cover 16 on the outer side in the left-right direction. The output gear 15 is engaged with the transmission mechanism 3 through the opening 161. Note that the example of Fig. 4 does not exclude a configuration in which at least a part of the output gear 15 is disposed outside the output cover 16 through the opening 161, and does not exclude a configuration in which the end of the output shaft portion 14 on the outer side in the left-right direction is disposed outside the output cover 16 through the opening 161.

In addition, an edge of the output cover 16 along an outer edge of the opening 161 is connected to and covered with an end of the transmission cover 34 of the transmission mechanism 3 on the inner side in the left-right direction. By the output cover 16 and the transmission cover 34, it is possible to prevent dust (particularly, sand dust, splashed water, mud, and the like generated when the lower traveling body moves forward and backward, turns, and the like) from adhering to the output shaft portion 14, the output gear 15, and the like, or from entering the inside thereof.

### <1-4-2. Drive Section 2>

The drive section 2 includes an input shaft portion 21, a passive gear 22, a speed reducer 24, a drive shaft portion 25, a drive bearing 26, and an input cover 27. The input cover 27, the passive gear 22, the input shaft portion 21, the speed reducer 24, and the drive shaft portion 25 are disposed in this order from the inner side to the outer side in the left-right direction.

The input shaft portion 21 extends in parallel with the rotation axis J1, and extends along the rotation axis J1 in Fig. 4. In Fig. 4, an outer end of the input shaft portion 21 in the left-right direction is connected to an input shaft of the speed reducer 24, the input shaft extending inward in the left-right direction along the rotation axis J1. Alternatively, the input shaft portion 21 may be the input shaft of the speed reducer 24.

The passive gear 22 is mounted on the input shaft portion 21. The passive gear 22 is disposed on the inner side of the input shaft portion 21 in the left-right direction on the inner side of the speed reducer 24 in the left-right direction. The passive gear 22 extends in a radial direction with respect to an axis (for example, the rotation axis J1) extending in the left-right direction through the center of the input shaft portion 21. In Fig. 4, the passive gear 22 is a bevel gear, and is disposed at an end of the input shaft portion 21 on the inner side in the left-right direction. The passive gear 22 is engaged with an end of the transmission mechanism 3 on the drive section 2 side. The passive gear 22 is rotatable, together with the input shaft portion 21 and the input shaft of the speed reducer 24, about an axis (for example, the rotation axis J1) extending in the left-right direction through the center of the input shaft portion 21. Thus, the driving force output from the transmission mechanism 3 to the passive gear 22 is input to the speed reducer 24.

The speed reducer 24 increases the driving force transmitted from the transmission mechanism 3 by deceleration at a predetermined speed reduction ratio and outputs the increased driving force to the sprocket 203. **In** Fig. 4, the speed reducer 24 is disposed between the passive gear 22 and the drive shaft portion 25 (and the sprocket 203), increases the driving force input to the input shaft by deceleration at a predetermined speed reduction ratio, and outputs the increased driving force to the drive shaft portion 25. Thus, with the arrangement of the speed reducer 24, the drive section 2 can efficiently output the driving force increased by the speed reducer 24 to the nearest sprocket 203.

The drive shaft portion 25 extends along the rotation axis J1. The sprocket 203 extends outward in the radial direction with respect to the rotation axis J1 from an outer peripheral surface of the drive shaft portion 25. An inner end of the drive shaft portion 25 in the left-right direction is connected to an output shaft of the speed reducer 24, the output shaft extending outward in the left-right direction along the rotation axis J1. Alternatively, the drive shaft portion 25 may be the output shaft of the speed reducer 24.

The drive shaft portion 25 is rotatable about the rotation axis J1 together with the output shaft of the speed reducer 24 and the sprocket 203. Thus, the driving force output from the transmission mechanism 3 is output to the sprocket 203. That is, the sprocket 203 rotates by the driving force to seamlessly rotationally move the crawler 206.

The drive shaft portion 25 is rotatably held by the holding member 207 via the drive bearing 26. For example, the drive bearing 26 is a ball bearing in the present embodiment. An inner ring of the drive bearing 26 is connected to the drive shaft portion 25. In addition, an opening is formed at an end of the holding member 207 on the outer side in the left-right direction. A bearing holding portion that holds an outer ring of the drive bearing 26 is disposed at an edge of the opening. Thus, the outer ring of the drive bearing 26 is fixed to the holding member 207.

The input cover 27 is a plate-like member extending in a direction intersecting the left-right direction, and is disposed on the outer side of the passive gear 22 in the left-right direction (rightward in Fig. 4). An opening 271 is formed in the input cover 27. The passive gear 22 is engaged with the transmission mechanism 3 through the opening 271. Note that the example of Fig. 4 does not exclude a configuration in which at least a part of the passive gear 22 is disposed outside the input cover 27 through the opening 271, and does not exclude a configuration in which the end of the input shaft portion 21 on the outer side in the left-right direction is disposed outside the input cover 27 through the opening 271.

An outer edge of the input cover 27 is connected to an inner surface of the holding member 207 and a rear end surface of the side frame 2012. An edge along an outer edge of the opening 271 of the input cover 27 is connected to and covered with an end of the transmission cover 34 of the transmission mechanism 3 on the outer side in the left-right direction. Thus, the input cover 27 covers, together with the holding member 207 and the transmission cover 34, a portion of the drive section 2 on the inner side in the left-right direction except for the input cover 27. For example, the input shaft portion 21, the passive gear 22, the speed reducer 24, the drive bearing 26, and the like are covered. Thus, it is possible to prevent dust (particularly, sand dust, splashed water, mud, and the like generated when the lower traveling body moves forward and backward, turns, and the like) from adhering to the above-described portion or entering the inside thereof.

### < 1-4-3. Transmission Mechanism 3>

The transmission mechanism 3 includes the transmission shaft portion 33, a first transmission gear 31, a second transmission gear 32, and a transmission cover 34. The transmission shaft portion 33 extends along a rotation axis J3. The rotation axis J3 extends obliquely downward and obliquely rearward as it goes outward in the left-right direction. Each of the first transmission gear 31 and the second transmission gear 32 is a bevel gear, and extends in a radial direction with respect to the rotation axis J3.

The first transmission gear 31 is mounted on the output section 1 side of the transmission shaft portion 33. The second transmission gear 32 is mounted on the drive section 2 side of the transmission shaft portion 33. At this time, for example, the first transmission gear 31 is engaged with the output section 1, and the second transmission gear 32 is engaged with the sprocket 203 side. Thus, the transmission mechanism 3 can transmit the driving force of the electric motor 11 to the sprocket 203 side with a simple configuration.

The first transmission gear 31 meshes with the output gear 15 of the output section 1. The second transmission gear 32 meshes with the passive gear 22 of the drive section 2. The transmission shaft portion 33, the first transmission gear 31, and the second transmission gear 32 are rotatable about the rotation axis J3. Thus, the driving force of the electric motor 11 can be transmitted to the sprocket 203 side by the meshing structure of the first transmission gear 31 and the output gear 15 and the meshing structure of the second transmission gear 32 and the passive gear 22.

The transmission cover 34 is a cylindrical member that houses the first transmission gear 31, the second transmission gear 32, and the transmission shaft portion 33, and extends along the transmission shaft portion 33. As described above, the end of the transmission cover 34 on the output section 1 side is connected to the edge of the output cover 16 along the outer edge of the opening 161. The end of the transmission cover 34 on the drive section 2 side is connected to the edge of the input cover 27 along the outer edge of the opening 271. Thus, it is possible to prevent dust (particularly, sand dust, splashed water, mud, and the like generated when the lower traveling body 200 moves forward and backward, turns, and the like) from adhering to members (for example, the transmission shaft portion 33, the first transmission gear 31, and the second transmission gear 32) in the transmission cover 34 or from entering the inside of the members.

The transmission shaft portion 33 extends from the output shaft portion 14 side and transmits the driving force output from the output section 1 to the sprocket 203 side. The transmission shaft portion 33 extends downward from the output shaft portion 14 side toward the sprocket 203 side, in other words, extends outward in the left-right direction and obliquely downward.

Thus, the output section 1 is disposed at a position inward in the left-right direction and upward away from the sprocket 203. Therefore, in the hydraulic excavator 100, the output section 1 including the electric motor 11 can be disposed at a position farther away from the road surface on which the lower traveling body 200 travels. Accordingly, even while traveling on a rough road surface, the hydraulic excavator 100 can suppress or prevent the output section 1 (particularly, the electric motor 11) from abutting on earth and sand, rocks, and the like exposed on the road surface.

Furthermore, in the hydraulic excavator 100, the output section 1 including the electric motor 11 can be disposed to be separated inward in the left-right direction from the sprocket 203 mounted on the side frame 2012. Therefore, the hydraulic excavator 100 can improve the degree of freedom in arrangement design of the output section 1 (particularly, the electric motor 11) and members (the sprocket 203, the crawler 206, and the like) mounted on the side frame 2012 while preventing interference of the output section 1 with the members.

In addition, the hydraulic excavator 100 can suppress or prevent earth and sand, rocks, mud, and the like splashed up from the road surface by the sprockets 203, the crawlers 206, and the like during traveling from hitting the output section 1.

Preferably, the transmission shaft portion 33 further extends outward in the front-rear direction (that is, rearward) from the output shaft portion 14 side toward the sprocket 203 side (see Fig. 3). Thus, the output section 1 is disposed on the inner side of the sprocket 203 in the front-rear direction. Therefore, the output section 1 supported by the center frame 2011 can be compactly disposed. In addition, the output section 1 can be disposed away from the sprocket 203 inward in the front-rear direction. Therefore, the hydraulic excavator 100 can further suppress or prevent earth and sand, rocks, mud, and the like splashed up from the road surface by the sprocket 203, the crawler 206, and the like during traveling from hitting the output section 1. However, this example does not exclude a configuration in which the transmission shaft portion 33 does not extend outward in the front-rear direction from the output shaft portion 14 side toward the sprocket 203 side.

### < 1-4-4. Another Configuration Example of Drive Unit 208>

Next, another configuration example of the drive unit 208 will be described with reference to Fig. 5. The drive unit 208 includes the output section 1, the drive section 2, and the transmission mechanism 3. In Fig. 5, as in Fig. 4, the output section 1 is horizontally disposed at the rear end portion of the center frame 2011 such that the output shaft portion 14 that outputs the driving force faces outward in the left-right direction (that is, leftward).

The output section 1 includes the electric motor 11, the brake device 12, a speed reducer 13, the output shaft portion 14, the output gear 15, and the output cover 16. The electric motor 11, the brake device 12, the speed reducer 13, the output shaft portion 14, and the output gear 15 are disposed in the above-described order from the inner side to the outer side in the left-right direction.

The electric motor 11 outputs the driving force (rotational force) to (an input shaft of) the speed reducer 13. The brake device 12 is, for example, a parking brake, and is disposed between the electric motor 11 and the speed reducer 13.

The brake device 12 suppresses or prevents the transmission of the driving force from the electric motor 11 to the input shaft of the speed reducer 13 according to the operator's operation or the like in the operation section 401. Alternatively, the brake device 12 suppresses or prevents driving (rotation) of the output shaft of the electric motor 11, the input shaft of the speed reducer 13, and the like according to the operator's operation or the like in the operation section 401.

The speed reducer 13 is disposed on the outer side of the brake device 12 in the left-right direction. The speed reducer 13 increases the driving force input to the input shaft by deceleration at a predetermined speed reduction ratio and outputs the increased driving force to the output gear 15 via the output shaft portion 14. That is, the output section 1 increases the driving force output from the electric motor 11 by deceleration at a predetermined speed reduction ratio, and outputs the increased driving force to the transmission mechanism 3. Thus, with the arrangement of the speed reducer 13, the output section 1 can efficiently output the driving force of the electric motor 11 to the nearest speed reducer 13 and increase the driving force. In addition, the output section 1 can output a larger driving force to the transmission mechanism 3.

The output shaft portion 14 is connected to an output shaft of the speed reducer 13 and extends along the motor rotation axis J2. At least a part of the output shaft portion 14 protrudes outward in the left-right direction from an end of the speed reducer 13 on the outer side in the left-right direction. Note that the output shaft portion 14 is not limited to this example, and may be the same member as the output shaft of the speed reducer 13.

The output cover 16 is disposed at the end of the speed reducer 13 on the outer side in the left-right direction, and covers the output shaft portion 14, the output gear 15, and the like.

Next, the drive section 2 includes the input shaft portion 21, the passive gear 22, the drive bearing 26, and the input cover 27.

The input shaft portion 21 extends along the rotation axis J1 and is coupled to the sprocket 203. The rotation axis J1 extends in the left-right direction through the rotation center of the sprocket 203.

The passive gear 22 is disposed on the inner side of the input shaft portion 21 in the left-right direction on the inner side of the sprocket 203 and the drive bearing 26 in the left-right direction. In Fig. 5, the passive gear 22 is a bevel gear, and is disposed at the end of the input shaft portion 21 on the inner side in the left-right direction.

The input shaft portion 21 is rotatable about the rotation axis J1 together with the passive gear 22 and the sprocket 203. Thus, the driving force output from the transmission mechanism 3 to the passive gear 22 is transmitted to the sprocket 203. That is, the sprocket 203 rotates by the driving force to seamlessly rotationally move the crawler 206.

The input shaft portion 21 is rotatably held by the holding member 207 via the drive bearing 26. For example, the drive bearing 26 is a ball bearing in the present embodiment. The inner ring of the drive bearing 26 is connected to the input shaft portion 21. The outer ring of the drive bearing 26 is fixed to the holding member 207.

Note that the configurations of the output section 1 and the drive section 2 are not limited to the examples of Figs. 4 and 5. For example, the output section 1 in the first embodiment only needs to include at least the electric motor 11, the output shaft portion 14, the output gear 15, and the output cover 16. In addition, the drive section 2 in the first embodiment only needs to include at least the input shaft portion 21, the passive gear 22, the drive bearing 26, and the input cover 27. Furthermore, in these cases, the brake device 12 and the speed reducers 13 and 24 only need to be disposed in at least one of the output section 1 and the drive section 2. However, this example does not exclude a configuration in which the brake device 12 and the speed reducers 13 and 24 are not disposed in either the output section 1 or the drive section 2.

### < 1-4-5. First Configuration Example to Fifth Configuration Example of Output Section 1>

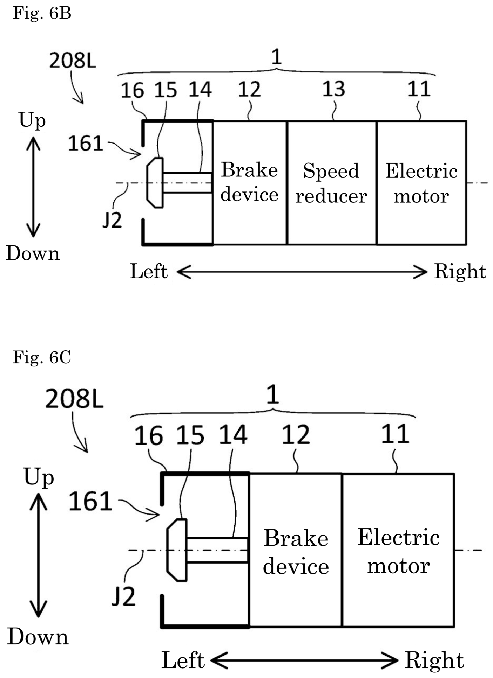

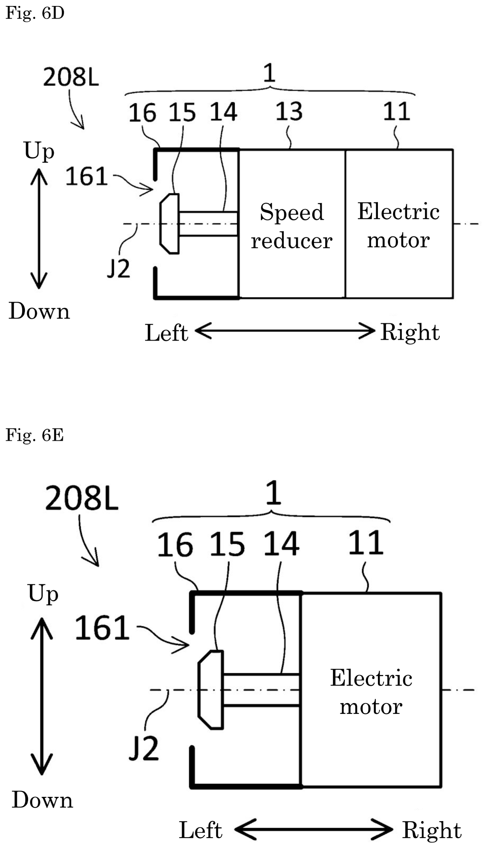

Fig. 6A is a schematic diagram illustrating a first configuration example of the output section 1 in the first embodiment. Fig. 6B is a schematic diagram illustrating a second configuration example of the output section 1 in the first embodiment. Fig. 6C is a schematic diagram illustrating a third configuration example of the output section 1 in the first embodiment. Fig. 6D is a schematic diagram illustrating a fourth configuration example of the output section 1 in the first embodiment. Fig. 6E is a schematic diagram illustrating a fifth configuration example of the output section 1 in the first embodiment. Figs. 6A to 6E are diagrams of the output section 1 of the drive unit 208L on the left side as viewed from the rear side to the front. In Figs. 6A to 6E, the left side corresponds to the outside in the left-right direction, and the right side corresponds to the inside in the left-right direction.

### (First Configuration Example of Output Section 1)

The output section 1 of the first configuration example illustrated in Fig. 6A has a similar configuration to that of the output section 1 of Fig. 5, and includes the electric motor 11, the brake device 12, the speed reducer 13, the output shaft portion 14, the output gear 15, and the output cover 16. The electric motor 11, the brake device 12, the speed reducer 13, the output shaft portion 14, and the output gear 15 are disposed in the above-described order from the inner side to the outer side in the left-right direction.

Note that the brake device 12 may be disposed on the inner side of the speed reducer 13 in the left-right direction.

### (Second Configuration Example of Output Section 1)

The output section 1 of the second configuration example illustrated in Fig. 6B includes the electric motor 11, the brake device 12, the speed reducer 13, the output shaft portion 14, the output gear 15, and the output cover 16. The electric motor 11, the speed reducer 13, the brake device 12, the output shaft portion 14, and the output gear 15 are disposed in this order from the inner side to the outer side in the left-right direction.

The electric motor 11 outputs the driving force (rotational force) to (the input shaft of) the speed reducer 13. The speed reducer 13 is disposed on the outer side of the electric motor 11 in the left-right direction, increases the driving force input to the input shaft by deceleration at a predetermined speed reduction ratio, and outputs the increased driving force to the output gear 15 via the output shaft portion 14.

The brake device 12 suppresses or prevents the transmission of the driving force from the output shaft of the speed reducer 13 to the output shaft portion 14 according to the operator's operation or the like in the operation section 401. Alternatively, the brake device 12 suppresses or prevents driving (rotation) of the output shaft of the speed reducer 13, the output shaft portion 14, and the like according to the operator's operation or the like in the operation section 401.

The output shaft portion 14 is connected to the output shaft of the speed reducer 13 and extends along the motor rotation axis J2. At least a part of the output shaft portion 14 protrudes outward in the left-right direction from the end of the brake device 12 on the outer side in the left-right direction. Note that in the output section 1 of the second configuration example, the output shaft portion 14 may be a member different from the output shaft of the speed reducer 13, or may be the same member as the output shaft of the speed reducer 13.

The output cover 16 is disposed at the end of the brake device 12 on the outer side in the left-right direction, and covers the output shaft portion 14, the output gear 15, and the like.

### (Third Configuration Example of Output Section 1)

The output section 1 of the third configuration example illustrated in Fig. 6C has a similar configuration to that of the output section 1 of Fig. 4, and includes the electric motor 11, the brake device 12, the output shaft portion 14, the output gear 15, and the output cover 16. The electric motor 11, the brake device 12, the output shaft portion 14, and the output gear 15 are disposed in the above-described order from the inner side to the outer side in the left-right direction.

### (Fourth Configuration Example of Output Section 1)

The output section 1 of the fourth configuration example illustrated in Fig. 6D includes the electric motor 11, the speed reducer 13, the output shaft portion 14, the output gear 15, and the output cover 16. The electric motor 11, the speed reducer 13, the output shaft portion 14, and the output gear 15 are disposed in the above-described order from the inner side to the outer side in the left-right direction.

The electric motor 11 outputs the driving force (rotational force) to (the input shaft of) the speed reducer 13. The speed reducer 13 is disposed on the outer side of the electric motor 11 in the left-right direction, increases the driving force input to the input shaft by deceleration at a predetermined speed reduction ratio, and outputs the increased driving force to the output gear 15 via the output shaft portion 14.

The output shaft portion 14 is connected to the output shaft of the speed reducer 13 and extends along the motor rotation axis J2. At least a part of the output shaft portion 14 protrudes outward in the left-right direction from the end of the speed reducer 13 on the outer side in the left-right direction. Note that the output shaft portion 14 is not limited to this example, and may be the same member as the output shaft of the speed reducer 13.

The output cover 16 is disposed at the end of the speed reducer 13 on the outer side in the left-right direction, and covers the output shaft portion 14, the output gear 15, and the like.

### (Fifth Configuration Example of Output Section 1)

The output section 1 of the fifth configuration example illustrated in Fig. 6E includes the electric motor 11, the output shaft portion 14, the output gear 15, and the output cover 16. The electric motor 11, the output shaft portion 14, and the output gear 15 are disposed in the above-described order from the inner side to the outer side in the left-right direction.

The electric motor 11 outputs driving force (rotational force) to the output gear 15 via the output shaft portion 14. The output shaft portion 14 is connected to the output shaft of the electric motor 11 and extends along the motor rotation axis J2. Note that the output shaft portion 14 is not limited to this example, and may be the same member as the output shaft of the electric motor 11. The output cover 16 is disposed at an end of the electric motor 11 on the outer side in the left-right direction, and covers the output shaft portion 14, the output gear 15, and the like.

### < 1-4-6. First Configuration Example to Fifth Configuration Example of Drive Section 2>

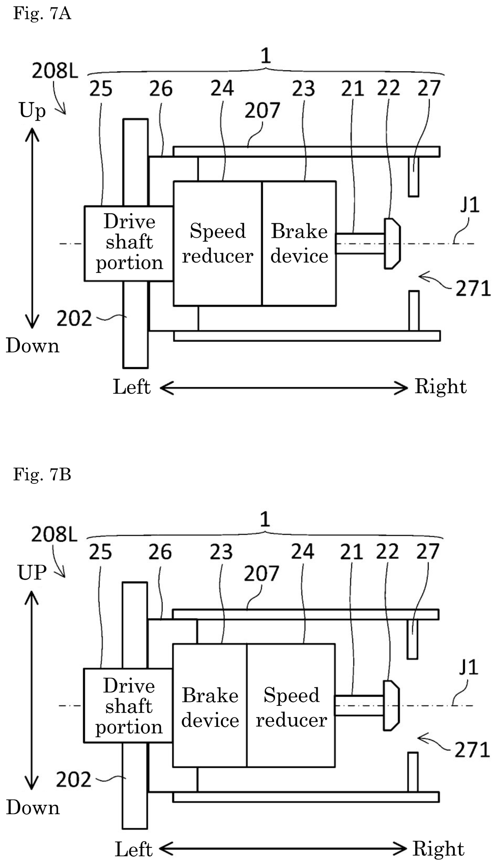

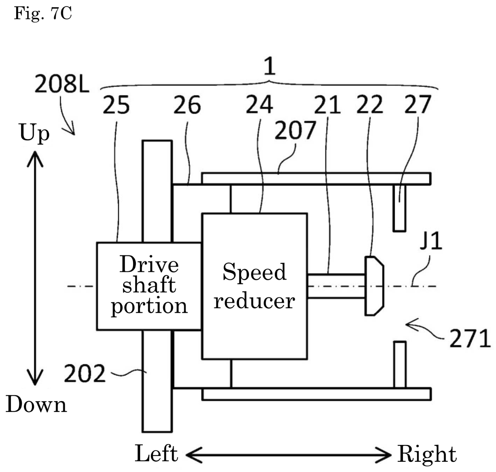

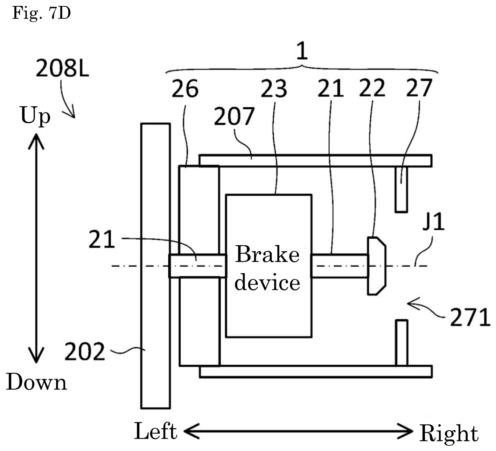

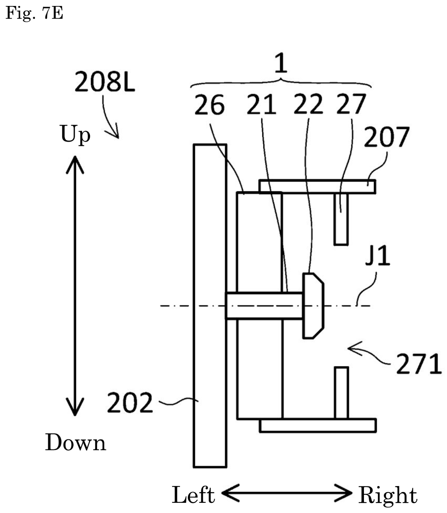

Fig. 7A is a schematic diagram illustrating a first configuration example of the drive section 2. Fig. 7B is a schematic diagram illustrating a second configuration example of the drive section 2. Fig. 7C is a schematic diagram illustrating a third configuration example of the drive section 2. Fig. 7D is a schematic diagram illustrating a fourth configuration example of the drive section 2. Fig. 7E is a schematic diagram illustrating a fifth configuration example of the drive section 2. Figs. 7A to 7E are diagrams of the drive section 2 of the drive unit 208L on the left side as viewed from the rear side to the front. In Figs. 7A to 7E, the left side corresponds to the outside in the left-right direction, and the right side corresponds to the inside in the left-right direction.

### (First Configuration Example of Drive Section 2)

The drive section 2 of the first configuration example illustrated in Fig. 7A includes the input shaft portion 21, the passive gear 22, a brake device 23, the speed reducer 24, the drive shaft portion 25, the drive bearing 26, and the input cover 27. The input cover 27, the passive gear 22, the input shaft portion 21, the brake device 23, the speed reducer 24, and the drive shaft portion 25 are disposed in this order from the inner side to the outer side in the left-right direction.

The input shaft portion 21 extends in parallel with the rotation axis J1, and for example, extends along the rotation axis J1. The outer end of the input shaft portion 21 in the left-right direction is connected to the input shaft of the speed reducer 24, the input shaft extending inward in the left-right direction along the rotation axis J1. Alternatively, the input shaft portion 21 may be the input shaft of the speed reducer 24.

The passive gear 22 is disposed on the inner side of the input shaft portion 21 in the left-right direction and engages with the end of the transmission mechanism 3 on the drive section 2 side. The passive gear 22 is rotatable, together with the input shaft portion 21 and the input shaft of the speed reducer 24, about an axis (for example, the rotation axis J1) extending in the left-right direction through the center of the input shaft portion 21.

The brake device 23 is, for example, a parking brake, and is disposed between the passive gear 22 and the speed reducer 24. The brake device 23 suppresses or prevents the transmission of the driving force from the transmission mechanism 3 to the sprocket 203 according to the operator's operation or the like in the operation section 401. Alternatively, the brake device 23 suppresses or prevents driving (rotation) of the input shaft portion 21, the output shaft of the speed reducer 24, and the like according to the operator's operation or the like in the operation section 401. Note that the configuration of the brake device 23 is not particularly limited. For example, the brake device 23 may be an electromagnetic clutch type, a mechanical type, or a hydraulic type.

The speed reducer 24 is disposed between the brake device 23 and the drive shaft portion 25 (and the sprocket 203), increases the driving force input to the input shaft by deceleration at a predetermined speed reduction ratio, and outputs the increased driving force to the drive shaft portion 25.

The drive shaft portion 25 extends along the rotation axis J1. The inner end of the drive shaft portion 25 in the left-right direction is connected to the output shaft of the speed reducer 24, the output shaft extending outward in the left-right direction along the rotation axis J1. Alternatively, the drive shaft portion 25 may be the same member as the output shaft of the speed reducer 24. The drive shaft portion 25 is rotatable about the rotation axis J1 together with the output shaft of the speed reducer 24 and the sprocket 203.

The drive bearing 26 is disposed between the speed reducer 24 and the sprocket 203. The drive shaft portion 25 is rotatably held by the holding member 207 via the drive bearing 26. For example, the drive bearing 26 is a ball bearing in the present embodiment. The inner ring of the drive bearing 26 is connected to the drive shaft portion 25.

Note that the brake device 23 may be disposed between the speed reducer 24 and the drive bearing 26.

### (Second Configuration Example of Drive Section 2)

The drive section 2 of the second configuration example illustrated in Fig. 7B includes the input shaft portion 21, the passive gear 22, the brake device 23, the speed reducer 24, the drive shaft portion 25, the drive bearing 26, and the input cover 27. The input cover 27, the passive gear 22, the input shaft portion 21, the speed reducer 24, the brake device 23, and the drive shaft portion 25 are disposed in this order from the inner side to the outer side in the left-right direction.

The speed reducer 24 increases the driving force input to the input shaft via the input shaft portion 21 by deceleration at a predetermined speed reduction ratio, and outputs the increased driving force to the drive shaft portion 25.

The brake device 23 is, for example, a parking brake, and is disposed between the speed reducer 24 and the drive shaft portion 25 (and the sprocket 203). The brake device 23 suppresses or prevents the transmission of the driving force from the speed reducer 24 to the drive shaft portion 25 (and the sprocket 203) according to the operator's operation or the like in the operation section 401. Alternatively, the brake device 23 suppresses or prevents driving (rotation) of the output shaft of the speed reducer 24, the drive shaft portion 25, and the like according to the operator's operation or the like in the operation section 401.

The drive shaft portion 25 extends along the rotation axis J1. The inner end of the drive shaft portion 25 in the left-right direction is connected to the output shaft of the speed reducer 24, the output shaft extending outward in the left-right direction along the rotation axis J1. Alternatively, the drive shaft portion 25 may be the same member as the output shaft of the speed reducer 24. The drive shaft portion 25 is rotatable about the rotation axis J1 together with the output shaft of the speed reducer 24 and the sprocket 203.

The drive bearing 26 is disposed between the speed reducer 24 and the sprocket 203. The drive shaft portion 25 is rotatably held by the holding member 207 via the drive bearing 26. For example, the drive bearing 26 is a ball bearing in the present embodiment. The inner ring of the drive bearing 26 is connected to the drive shaft portion 25.

### (Third Configuration Example of Drive Section 2)

The drive section 2 of the third configuration example illustrated in Fig. 7C has a similar configuration to that of the drive section 2 of Fig. 4, and includes the input shaft portion 21, the passive gear 22, the speed reducer 24, the drive shaft portion 25, the drive bearing 26, and the input cover 27. The input cover 27, the passive gear 22, the input shaft portion 21, the speed reducer 24, and the drive shaft portion 25 are disposed in this order from the inner side to the outer side in the left-right direction.

### (Fourth Configuration Example of Drive Section 2)

The drive section 2 of the fourth configuration example illustrated in Fig. 7D includes the input shaft portion 21, the passive gear 22, the brake device 23, the drive bearing 26, and the input cover 27. The passive gear 22, the input shaft portion 21, the speed reducer 24, and the drive shaft portion 25 are disposed in this order from the inner side to the outer side in the left-right direction.

The input shaft portion 21 extends along the rotation axis J1 and is coupled to the sprocket 203. The rotation axis J1 extends in the left-right direction through the rotation center of the sprocket 203. The input shaft portion 21 is rotatable about the rotation axis J1 together with the passive gear 22 and the sprocket 203. The input shaft portion 21 is rotatably held by the holding member 207 via the drive bearing 26. For example, the drive bearing 26 is a ball bearing in the present embodiment. The inner ring of the drive bearing 26 is connected to the input shaft portion 21.

The brake device 23 is, for example, a parking brake, and is disposed between the passive gear 22 and the sprocket 203. The brake device 23 suppresses or prevents the transmission of the driving force from the input shaft portion 21 to the sprocket 203 according to the operator's operation or the like in the operation section 401. Alternatively, the brake device 23 suppresses or prevents driving (rotation) of the input shaft portion 21 and the like according to the operator's operation or the like in the operation section 401.

### (Fifth Configuration Example of Drive Section 2)

The drive section 2 of the fifth configuration example illustrated in Fig. 7E has a similar configuration to that of the drive section 2 of Fig. 5, and includes the input shaft portion 21, the passive gear 22, the drive bearing 26, and the input cover 27. The input cover 27, the passive gear 22, the input shaft portion 21, and the sprocket 203 are disposed in this order from the inner side to the outer side in the left-right direction.

### < 1-4-7. Arrangement of Brake Devices 12 and 23>

Preferably, the brake devices 12 and 23 are disposed between the electric motor 11 and the speed reducers 13 and 24 in the transmission path of the driving force. In this case, the brake devices 12 and 23 suppress or prevent the transmission of the driving force from the electric motor 11 to the speed reducers 13 and 24.

For example, in Fig. 4, the brake device 12 is disposed between the electric motor 11 and the speed reducer 24 in the transmission path of the driving force in the drive unit 208.

In addition, in Figs. 5 and 6A, the brake device 12 is disposed between the electric motor 11 and the speed reducer 13 in the transmission path of the driving force in the output section 1. That is, preferably, the brake device 12 is disposed between the electric motor 11 and the speed reducer 13 (in other words, on the input end side of the speed reducer 13) in the transmission path of the driving force in the output section 1 including the speed reducer 13.

In addition, in Fig. 7A, the brake device 23 is disposed between the passive gear 22 and the speed reducer 24 in the drive section 2. That is, preferably, the brake device 23 is disposed between the electric motor 11 and the speed reducer 24 (in other words, on the input end side of the speed reducer 24) in the transmission path of the driving force in the drive section 2 including the speed reducer 24.

Thus, the brake devices 12 and 23 can be disposed in front of the speed reducers 13 and 24 (on the input end side). The driving force output to the speed reducers 13 and 24 is smaller than the driving force output from the speed reducers 13 and 24. Therefore, the brake devices 12 and 23 can suppress or prevent the transmission of the driving force from the electric motor 11 to the speed reducers 13 and 24 with a smaller load as compared with a configuration in which the brake devices 12 and 23 are disposed behind the speed reducers 13 and 24 (on the output end side).

However, the above-described example does not exclude a configuration in which the brake devices 12 and 23 are not disposed between the electric motor 11 and the speed reducers 13 and 24 in the transmission path of the driving force. For example, the brake devices 12 and 23 may be disposed between the speed reducers 13 and 24 and the sprocket 203 in the transmission path of the driving force in the drive unit 208. In one example, the drive unit 208 includes the output section 1 in Fig. 6D and the drive section 2 in Fig. 7D. In addition, as illustrated in Fig. 6A, the brake device 12 may be disposed between the speed reducer 13 and the output gear 15 (in other words, on the output end side of the speed reducer 13) in the transmission path of the driving force in the output section 1. In addition, as illustrated in Fig. 7B, the brake device 12 may be disposed between the sprocket 203 and the speed reducer 24 (in other words, on the output end side of the speed reducer 24) in the transmission path of the driving force in the drive section 2.

Preferably, as illustrated in Figs. 7A, 7B, and 7D, the drive section 2 includes the brake device 23. The brake device 23 is disposed between the transmission mechanism 3 (or the passive gear 22) and the sprocket 203 in the transmission path of the driving force, and suppresses or prevents the transmission of the driving force to the sprocket 203. Thus, by disposing the brake device 23 in the drive section 2, the hydraulic excavator 100 can reliably suppress or prevent the transmission of the driving force to the sprocket 203. For example, the brake device 23 can reliably suppress or prevent the driving (rotation) of the sprocket 203 even if the electric motor 11 becomes inoperable. However, this example does not exclude the configuration in which the drive section 2 does not include the brake device 23 as illustrated in Figs. 7C and 7E.

### <2. Second Embodiment>

Next, a second embodiment will be described. In the second embodiment, an output section 1 is disposed obliquely horizontally such that an output shaft portion 14 faces outward in the left-right direction and downward. Hereinafter, a configuration different from that of the first embodiment will be described. Components similar to those in the first embodiment are denoted by the same reference numerals. In addition, description of configurations similar to those of the first embodiment may be omitted.

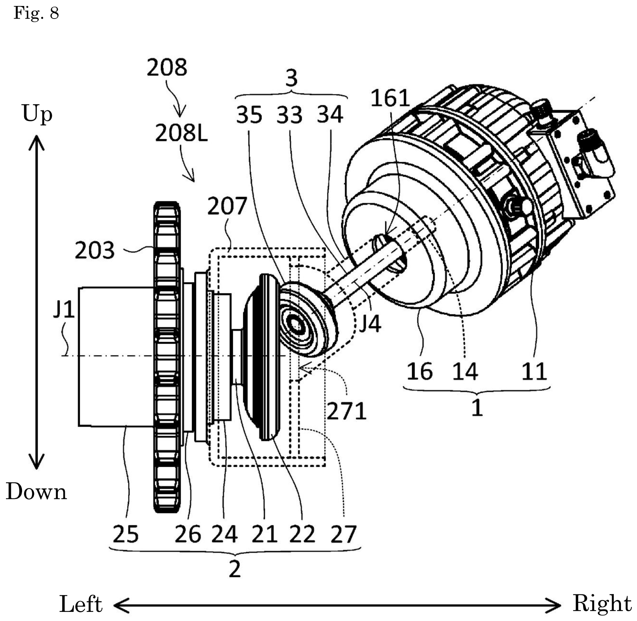

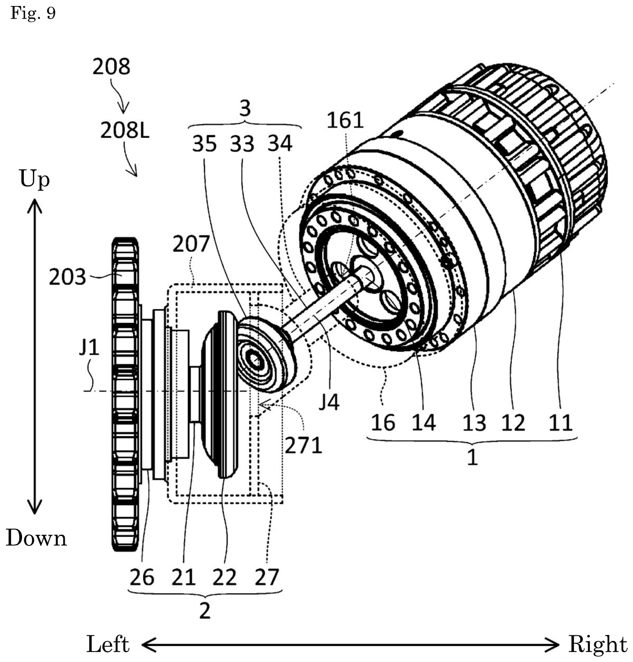

Fig. 8 is a rear view illustrating a configuration example of a drive unit 208 in the second embodiment. Fig. 9 is a rear view illustrating another configuration example of the drive unit 208 in the second embodiment. Note that the structures of the drive units 208 on the left and right sides are bilaterally symmetrical, and are otherwise the same. Therefore, in the description of the configuration of the drive unit 208, a configuration example of a drive unit 208L on the left side will be described, and the description of the configuration of the drive unit 208 on the right side will be omitted. In addition, Figs. 8 and 9 are diagrams of the drive unit 208L on the left side as viewed from the rear side to the front. In Figs. 8 and 9, the left side corresponds to the outside in the left-right direction, and the right side corresponds to the inside in the left-right direction.

In Fig. 8, the output section 1 of the drive unit 208 includes an electric motor 11, a brake device 12, the output shaft portion 14, and an output cover 16. The electric motor 11, the brake device 12, and the output shaft portion 14 are disposed in this order from the inner side to the outer side in the left-right direction.

In Fig. 9, the output section 1 of the drive unit 208 includes the electric motor 11, the brake device 12, a speed reducer 13, the output shaft portion 14, and the output cover 16. The electric motor 11, the brake device 12, the speed reducer 13, and the output shaft portion 14 are disposed in this order from the inner side to the outer side in the left-right direction.

In the second embodiment, the electric motor 11 is disposed obliquely horizontally such that an output shaft (not illustrated) faces outward in the left-right direction and downward. Note that the output shaft extends along a motor rotation axis J4 and is rotatable about the motor rotation axis J4. As illustrated in Figs. 8 and 9, the motor rotation axis J4 extends downward toward the outside in the left-right direction. Preferably, the motor rotation axis J4 further extends outward in the left-right direction as it goes outward in the left-right direction. However, this example does not exclude a configuration in which the motor rotation axis J4 does not extend outward in the left-right direction as it goes outward in the left-right direction.

The output shaft portion 14 is connected to the output shaft of the electric motor 11 and extends along the motor rotation axis J2. At least a part of the output shaft portion 14 protrudes outward in the left-right direction from the end of the brake device 12 on the outer side in the left-right direction.

The configuration of the drive section 2 in Fig. 8 is similar to that in Fig. 4. In addition, the configuration of the drive section 2 in Fig. 9 is similar to that in Fig. 5. Therefore, the description of the configuration of the drive section 2 in the second embodiment will be omitted.

The transmission mechanism 3 includes a transmission shaft portion 33, a transmission cover 34, and a transmission gear 35. The transmission shaft portion 33 is coupled to the output shaft portion 14 and extends along the motor rotation axis J4. That is, the output shaft portion 14 and the transmission shaft portion 33 extend along the same axis J4. Thus, for example, even when an end of the output shaft portion 14 on the transmission mechanism 3 side is coupled to an end of the transmission shaft portion 33 on the output shaft portion 14 side, both the output shaft portion 14 and the transmission shaft portion 33 can be rotated about the same axis J4. Therefore, the transmission shaft portion 33 can be connected to the output shaft portion 14 so as to be able to co-rotate with a simple configuration. Note that the transmission shaft portion 33 is not limited to this example, and may be the same member as the output shaft portion 14.

The transmission gear 35 is a bevel gear, and extends in a radial direction with respect to the motor rotation axis J4. The transmission gear 35 is disposed on the drive section 2 side of the transmission shaft portion 33 and meshes with the passive gear 22 of the drive section 2. The transmission gear 35 is rotatable about the motor rotation axis J4 together with the output shaft portion 14 and the transmission shaft portion 33.

The transmission cover 34 is a cylindrical member that houses the transmission shaft portion 33 and the transmission gear 35, and extends along the transmission shaft portion 33.

Note that the configurations of the output section 1 and the drive section 2 in the second embodiment are not limited to the examples of Figs. 8 and 9. For example, the output section 1 in the second embodiment only needs to include at least the electric motor 11, the output shaft portion 14, and the output cover 16. In addition, the drive section 2 in the second embodiment only needs to include at least the input shaft portion 21, the passive gear 22, the drive bearing 26, and the input cover 27. Furthermore, in these cases, the brake device 12 and the speed reducers 13 and 24 only need to be disposed in at least one of the output section 1 and the drive section 2. However, this example does not exclude a configuration in which the brake device 12 and the speed reducers 13 and 24 are not disposed in either the output section 1 or the drive section 2.

Each component of the output section 1 in the second embodiment can be disposed in the same manner as in Figs. 6A to 6E of the first embodiment except for the output gear 15 and the direction in which the motor rotation axis J4 extends.

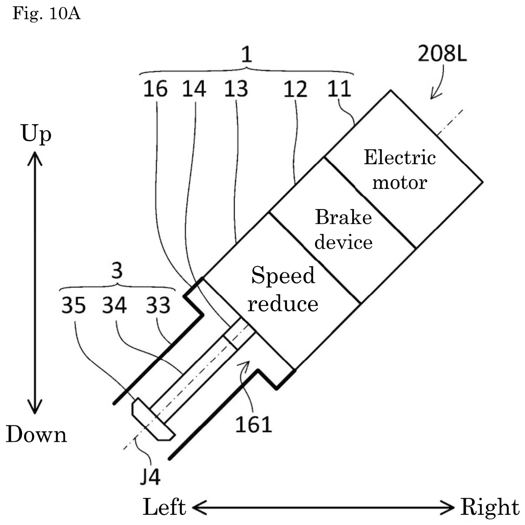

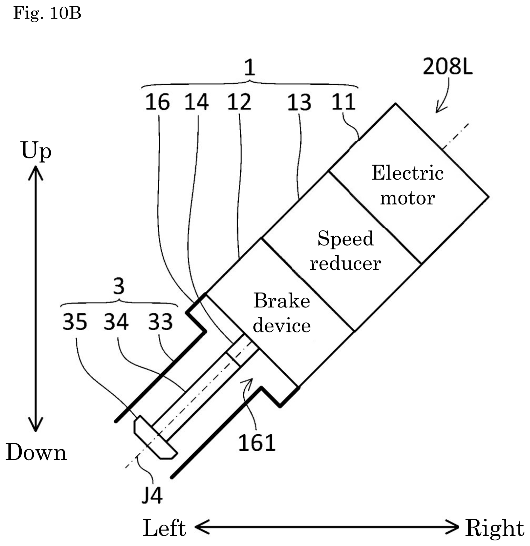

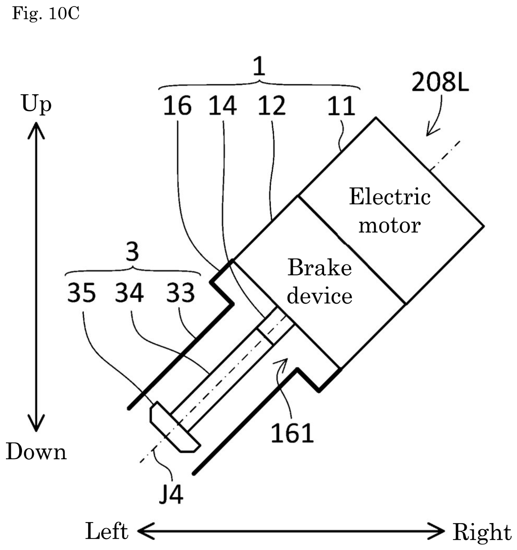

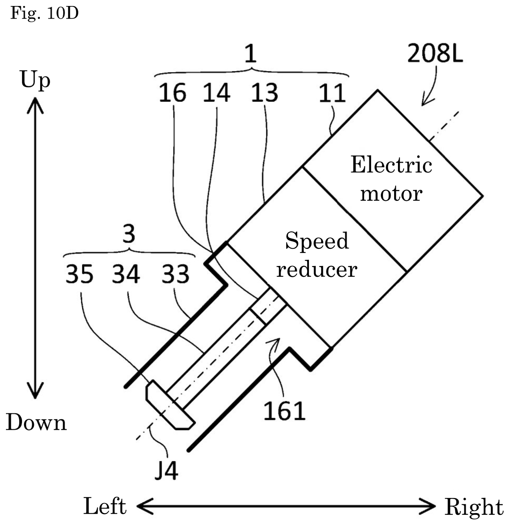

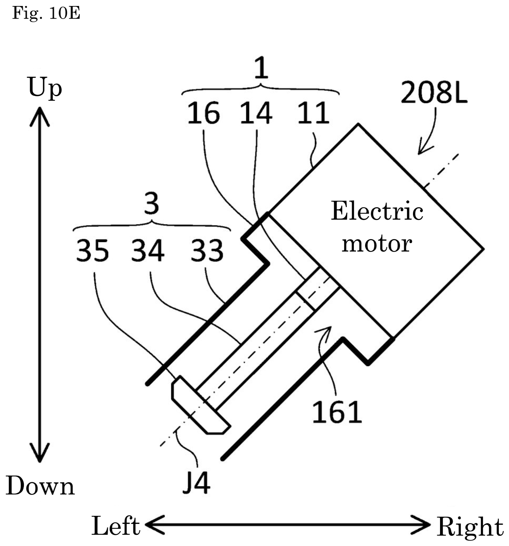

Fig. 10A is a schematic diagram illustrating a first configuration example of the output section 1 in the second embodiment. Fig. 10B is a schematic diagram illustrating a second configuration example of the output section 1 in the second embodiment. Fig. 10C is a schematic diagram illustrating a third configuration example of the output section 1 in the second embodiment. Fig. 10D is a schematic diagram illustrating a fourth configuration example of the output section 1 in the second embodiment. Fig. 10E is a schematic diagram illustrating a fifth configuration example of the output section 1 in the second embodiment. Figs. 10A to 10E are diagrams of the output section 1 of the drive unit 208L on the left side as viewed from the rear side to the front. In Figs. 10A to 10E, the left side corresponds to the outside in the left-right direction, and the right side corresponds to the inside in the left-right direction.

For example, in the output section 1 illustrated in Figs. 10A to 10E, the output gear 15 is not disposed on the transmission mechanism 3 side of the output shaft portion 14. In addition, the end of the output shaft portion 14 on the transmission mechanism 3 side is connected to the end of the transmission shaft portion 33 on the output section 1 side. Other than the above, each component of the output section 1 in Figs. 10A to 10E is disposed along the motor rotation axis J4 in the same manner as in Figs. 6A to 6E.

In addition, each component of the drive section 2 in the second embodiment can be disposed in the same manner as in Figs. 7A to 7E of the first embodiment.

### <3. Third Embodiment>

Next, a third embodiment will be described. In the third embodiment, an output section 1 is horizontally disposed such that an output shaft portion 14 faces outward in the front-rear direction. Hereinafter, configurations different from those of the first embodiment and the second embodiment will be described. Components similar to those in the first embodiment and the second embodiment are denoted by the same reference numerals. In addition, description of configurations similar to those of the first embodiment and the second embodiment may be omitted.

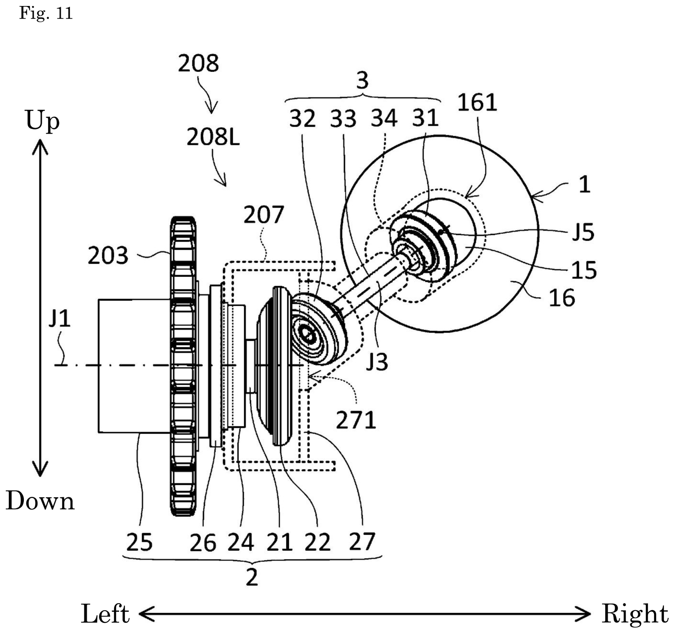

Fig. 11 is a rear view illustrating a configuration example of a drive unit 208 in the third embodiment. Note that the structures of the drive units 208 on the left and right sides are bilaterally symmetrical, and are otherwise the same. Therefore, in the description of the configuration of the drive unit 208, a configuration example of a drive unit 208L on the left side will be described, and the description of the configuration of the drive unit 208 on the right side will be omitted. In addition, Fig. 11 is a diagram of the drive unit 208L on the left side as viewed from the rear side to the front. In Fig. 11, the left side corresponds to the outside in the left-right direction, and the right side corresponds to the inside in the left-right direction.

In Fig. 11, the configurations of the output section 1, a drive section 2, and a transmission mechanism 3 are the same as those in Fig. 4 except for the arrangement posture of the output section 1. In the output section 1 of Fig. 11, an output shaft of an electric motor 11, the output shaft portion 14, and the like extend along a motor rotation axis J5. The motor rotation axis J5 extends in a direction perpendicular to the up-down direction and a direction in which a rotation axis J1 of a sprocket 203 extends, that is, the motor rotation axis J5 is parallel to the front-rear direction. For example, the output shaft of the electric motor 11 protrudes outward (rearward) in the front-rear direction from a main end portion of the electric motor 11. The output shaft portion 14 is disposed outside (behind) the electric motor 11 in the front-rear direction and extends in the front-rear direction.

According to the third embodiment, the output section 1 can be horizontally placed in a state where the output shaft portion 14 extends in the front-rear direction. Therefore, even if the number of components disposed side by side in the front-rear direction increases, the size of the output section 1 in the left-right direction and the up-down direction hardly increases. Therefore, the output section 1 can be compactly disposed in a state of being separated from the road surface.

### <4. Fourth Embodiment>

Next, a fourth embodiment will be described. In the fourth embodiment, ends of a transmission shaft portion 33 of a transmission mechanism 3 are connected to an output shaft portion 14 of the output section 1 and an input shaft portion 21 of a drive section 2 by universal joints 41 and 42 instead of the meshing structure of the bevel gear. Hereinafter, configurations different from those of the first embodiment to the third embodiment will be described. Components similar to those in the first embodiment to the third embodiment are denoted by the same reference numerals. In addition, description of configurations similar to those of the first embodiment to the third embodiment may be omitted.

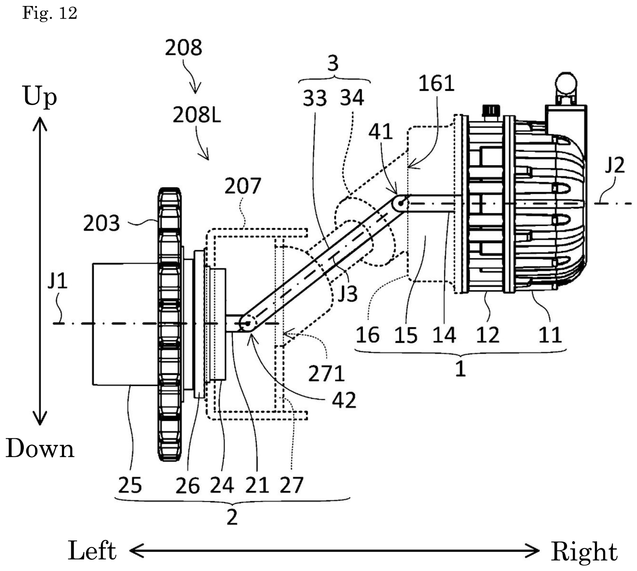

Fig. 12 is a schematic diagram illustrating a configuration example of a drive unit 208 in the fourth embodiment. Note that the structures of the drive units 208 on the left and right sides are bilaterally symmetrical, and are otherwise the same. Therefore, in the description of the configuration of the drive unit 208, a configuration example of a drive unit 208L on the left side will be described, and the description of the configuration of the drive unit 208 on the right side will be omitted. In addition, Fig. 12 is a diagram of the drive unit 208L on the left side as viewed from the rear side to the front. In Fig. 12, the left side corresponds to the outside in the left-right direction, and the right side corresponds to the inside in the left-right direction.

As illustrated in Fig. 12, an end of the transmission shaft portion 33 on the output section 1 side is three-dimensionally rotatably connected to an end of the output shaft portion 14 on the transmission mechanism 3 side by the universal joint 41. In other words, the connection angle between the transmission shaft portion 33 and the output shaft portion 14 can be freely changed. For example, the transmission shaft portion 33 is rotatable in a pitch direction and a yaw direction with respect to the output shaft portion 14 at a connection portion between the transmission shaft portion 33 and the output shaft portion 14.

Similarly, an end of the transmission shaft portion 33 on the drive section 2 side is three-dimensionally rotatably connected to an end of the input shaft portion 21 on the transmission mechanism 3 side by the universal joint 42. In other words, the connection angle between the transmission shaft portion 33 and the input shaft portion 21 can be freely changed. For example, the transmission shaft portion 33 is rotatable in the pitch direction and the yaw direction with respect to the input shaft portion 21 at a connection portion between the transmission shaft portion 33 and the input shaft portion 21.

Even when the configuration of the fourth embodiment is adopted, the transmission shaft portion 33 rotates about a rotation axis J3 and the input shaft portion 21 rotates about a rotation axis J1 according to the rotation of the output shaft portion 14 about a motor rotation axis J2. Therefore, similarly to the first embodiment to the third embodiment, the drive unit 208 can transmit the driving force (rotational force) of the output section 1 to the drive section 2 via the transmission mechanism 3, and can drive a sprocket 203.

### <5. Remarks>

The embodiments of the present invention have been described above. Note that the above embodiments are examples, and it is understood by those skilled in the art that various modifications can be made to combinations of the respective components and the respective processes, and these modifications are also within the scope of the present invention.

For example, the configurations described in the first embodiment to the fourth embodiment can be combined in accordance with the gist of the present invention as long as there is no particular contradiction.

### <6. Summary>

Hereinafter, the embodiments described so far will be summarized.

For example, a working machine 100 disclosed herein is
a working machine 100 including a traveling body 200 that can travel by a drive wheel 203 mounted on a side frame 2012 connected to a lower side of a side portion of a center frame 2011, the working machine 100 including:
an output section 1 that is supported by the center frame 2011 and outputs a driving force of an electric motor 11; and
a transmission mechanism 3 that transmits the driving force from the output section 1 to the drive wheel 203 side, in which
the transmission mechanism 3 includes a transmission shaft portion 33 that extends downward from the output section 1 side toward the drive wheel 203 side (first configuration).

In the working machine 100 according to the first configuration,
the transmission shaft portion 33 may extend further outward in a front-rear direction (for example, rearward in Fig. 3) from the output section 1 side toward the drive wheel 203 side (second configuration).

In the working machine 100 according to the first or second configuration,
the output section 1 may include an output shaft portion 14 that outputs the driving force to the transmission mechanism 3, and
the output shaft portion 14 may extend in a direction parallel to a rotation axis J1 of the drive wheel 203 (third configuration).

In the working machine 100 according to any one of the first to third configurations,
the transmission mechanism 3 may further include
a first bevel gear 31 mounted on the output section 1 side of the transmission shaft portion 33, and
a second bevel gear 32 mounted on the drive wheel 203 side of the transmission shaft portion 33 (fourth configuration).

The working machine 100 according to the fourth configuration may further include
a drive section 2 that drives the drive wheel 203, in which
the output section 1 may include
an output shaft portion 14 that outputs the driving force to the transmission mechanism 3, and
a third bevel gear 15 that is mounted on the output shaft portion 14 and meshes with the first bevel gear 31, and
the drive section 2 may include
an input shaft portion 21 to which the driving force is transmitted from the transmission mechanism 3, and
a fourth bevel gear 22 that is mounted on the input shaft portion 21 and meshes with the second bevel gear 32 (fifth configuration).

In the working machine 100 according to the first or second configuration,
the output section 1 may include an output shaft portion 14 that outputs the driving force to the transmission mechanism 3, and
the output shaft portion 14 and the transmission shaft portion 33 may extend along the same axis J4 (sixth configuration).

In the working machine 100 according to the first or second configuration,
a rotation axis J5 of the electric motor 11 may extend in a direction perpendicular to an up-down direction and a direction in which a rotation axis J1 of the drive wheel 203 extends (seventh configuration).

The working machine 100 according to any one of the first to seventh configurations may further include:
first speed reducers 13 and 24 that increase the driving force by deceleration at a predetermined speed reduction ratio; and
first brake devices 12 and 23 that are disposed between the electric motor 11 and the first speed reducers 13 and 24 in a transmission path of the driving force and suppress or prevent transmission of the driving force from the electric motor 11 to the first speed reducers 13 and 24 (eighth configuration).

In the working machine 100 according to any one of the first to eighth configurations,
the output section 1 may include a second speed reducer 13 that increases the driving force output from the electric motor 11 by deceleration at a predetermined speed reduction ratio and outputs the increased driving force to the transmission mechanism 3 (ninth configuration).

The working machine 100 according to any one of the first to ninth configurations may further include
a drive section 2 that drives the drive wheel 203, in which
the drive section 2 may include a third speed reducer 24 that increases the driving force transmitted from the transmission mechanism 3 by deceleration at a predetermined speed reduction ratio and outputs the increased driving force to the drive wheel 203 (tenth configuration).

The working machine 100 according to any one of the first to tenth configurations may further include
a drive section 2 that drives the drive wheel 203, in which
the drive section 2 may include a second brake device 23 that is disposed between the transmission mechanism 3 and the drive wheel 203 in a transmission path of the driving force and suppresses or prevents transmission of the driving force to the drive wheel 203 (eleventh configuration).

### [Industrial applicability]

The present invention is applicable to working machines such as construction machines and agricultural machines.

### LIST OF REFERENCE SIGNS

- 100: Hydraulic excavator (working machine)
- 200: Lower traveling body (traveling body)
- 201: Track frame
- 2011: Center frame
- 2012: Side frame
- 2013: Link frame
- 202: Idler
- 203: Sprocket (drive wheel)
- 204: Upper roller
- 205: Lower roller
- 206: Crawler
- 207: Holding member
- 208: Drive unit
- 300: Implement
- 301: Boom
- 3011: Boom cylinder
- 302: Arm
- 3021: Arm cylinder
- 303: Bucket
- 3031: Bucket cylinder
- 400: Upper turning body
- 401: Operation section
- 4011: Driver's seat
- 402: Machine body frame
- 403: Turning motor
- 404: Engine room
- 405: Hood
- 406: Battery unit
- 407: Motor
- 4081: Hydraulic pump
- 4082: Reservoir
- 4083: Control valve
- 4084: Hydraulic actuator
- 4085: Hydraulic motor
- 1: Output section
- 11: Electric motor
- 12: Brake device (first brake device)
- 13: Speed reducer (first speed reducer, second speed reducer)
- 14: Output shaft portion
- 15: Output gear (third bevel gear)
- 16: Output cover
- 161: Opening
- 2: Drive section
- 21: Input shaft portion
- 22: Passive gear (fourth bevel gear)
- 23: Brake device (first brake device, second brake device)
- 24: Speed reducer (first speed reducer, third speed reducer)
- 25: Drive shaft portion
- 26: Drive bearing
- 27: Input cover
- 271: Opening
- 3: Transmission mechanism
- 31: First transmission gear (first bevel gear)
- 32: Second transmission gear (second bevel gear)
- 33: Transmission shaft portion
- 34: Transmission cover
- 35: Transmission gear
- 41, 42: Universal joint

## Claims

1. A working machine including a traveling body that can travel by a drive wheel mounted on a side frame connected to a lower side of a side portion of a center frame, the working machine comprising:
an output section that is supported by the center frame and outputs a driving force of an electric motor; and
a transmission mechanism that transmits the driving force from the output section to the drive wheel side, wherein
the transmission mechanism includes a transmission shaft portion that extends downward from the output section side toward the drive wheel side.

2. The working machine according to claim 1, wherein the transmission shaft portion further extends outward in a front-rear direction from the output section side toward the drive wheel side.

3. The working machine according to claim 1 or 2, wherein the output section includes an output shaft portion that outputs the driving force to the transmission mechanism, and
the output shaft portion extends in a direction parallel to a rotation axis of the drive wheel.

4. The working machine according to claim 1 or 2, wherein the transmission mechanism further includes
a first bevel gear mounted on the output section side of the transmission shaft portion, and
a second bevel gear mounted on the drive wheel side of the transmission shaft portion.

5. The working machine according to claim 4 further comprising a drive section that drives the drive wheel, wherein
the output section includes
an output shaft portion that outputs the driving force to the transmission mechanism, and
a third bevel gear that is mounted on the output shaft portion and meshes with the first bevel gear, and
the drive section includes
an input shaft portion to which the driving force is transmitted from the transmission mechanism, and
a fourth bevel gear that is mounted on the input shaft portion and meshes with the second bevel gear.

6. The working machine according to claim 1 or 2, wherein the output section includes an output shaft portion that outputs the driving force to the transmission mechanism, and
the output shaft portion and the transmission shaft portion extend along an identical axis.

7. The working machine according to claim 1 or 2, wherein a rotation axis of the electric motor extends in a direction perpendicular to an up-down direction and a direction in which a rotation axis of the drive wheel extends.

8. The working machine according to claim 1 or 2, further comprising: a first speed reducer that increases the driving force by deceleration at a predetermined speed reduction ratio; and
a first brake device that is disposed between the electric motor and the first speed reducer in a transmission path of the driving force and suppresses or prevents transmission of the driving force from the electric motor to the first speed reducer.

9. The working machine according to claim 1 or 2, wherein the output section includes a second speed reducer that increases the driving force output from the electric motor by deceleration at a predetermined speed reduction ratio and outputs the increased driving force to the transmission mechanism.

10. The working machine according to claim 1 or 2, further comprising a drive section that drives the drive wheel, wherein
the drive section includes a third speed reducer that increases the driving force transmitted from the transmission mechanism by deceleration at a predetermined speed reduction ratio and outputs the increased driving force to the drive wheel.

11. The working machine according to claim 1 or 2, further comprising a drive section that drives the drive wheel, wherein
the drive section includes a second brake device that is disposed between the transmission mechanism and the drive wheel in a transmission path of the driving force and suppresses or prevents transmission of the driving force to the drive wheel.
